# NEUE EUROPÄISCHE PATENTSCHRIFT

(11) **EP 2 424 946 B2**
(45) Veröffentlichungstag und Bekanntmachung des Hinweises auf die Entscheidung über den Einspruch: **07.08.2019**
(45) Hinweis auf die Patenterteilung: 13.04.2016
(21) Anmeldenummer: 10718549.8
(22) Anmeldetag: 27.04.2010
(51) Int. Cl.: C09D 161/00, C08K 3/00

(54) **VERSCHLEIßFESTER GLEITLACK FÜR DIE BESCHICHTUNG VON MOTORKOLBEN**
WEAR-RESISTANT ANTIFRICTION LACQUER FOR COATING ENGINE PISTONS
VERNIS DE GLISSEMENT RÉSISTANT À L'USURE UTILISÉ COMME REVÊTEMENT DE PISTONS POUR MOTEUR

(30) Priorität: 29.04.2009 DE 102009002716
(43) Veröffentlichungstag der Anmeldung: 07.03.2012
(73) Patentinhaber: Federal-Mogul Nürnberg GmbH, 90441 Nürnberg (DE); Reicolor Chemie-GmbH Chemische- U. Lackfabrik, 90518 Altdorf b. Nürnberg (DE)
(72) Erfinder: JUNG, Christian, 96173 Oberhaid (DE); REITENSPIES, Jürgen, 90518 Altdorf (DE)
(74) Vertreter: Hoffmann Eitle
(86) Internationale Anmeldenummer: PCT/EP2010/055619
(87) Internationale Veröffentlichungsnummer: WO 2010/125060

(56) Entgegenhaltungen:
- EP-A1- 1 469 050
- EP-A2- 1 933 022
- WO-A1-2008/014531
- DE-A1- 1 933 369
- DE-A1- 1 933 369
- DE-A1- 2 914 987
- DE-A1- 2 914 987
- DE-A1- 10 328 120
- DE-A1-102006 058 871
- DE-T2- 69 908 869
- JP-A- H0 616 968
- JP-A- H0 665 395
- Römpp, Lacke und Druckfarben, ISBN, 3-13-776001-1
- Lehrbuch der Lacktechnologie ISBN 3-87870-192-6
- Lackharze ISBN 3-446-17475-3
- Glasurit-Handbuch Lacke und Farben ISBN 3-87870-192-6
- Lieferschein über beschichtete W28 Grosskolben von KS Kolbenschmidt GmbH an Wärtsilä NSD Nederland. (kommentiertes und unkommentiertes Exemplar)
- Stückliste
- technische Zeichnung eines Kolbenunterteils.
- Arbeitsplan zur Herstellung der Kolbenunterteile unter Verweis auf Verfahrenvorschrift A
- Hausnorm - Korrespondenzliste Zeichnungsangabe Verfahrenvorschrift A zu Verfahrenvorschrift VVT 800.028
- Verfahrenvorschrift VVT 800.028
- Auszug aus dem SAP-System der Kolbenschmidt GmbH
- Eidesstattliche Versicherung von Hr. Hartmann

## Beschreibung

### Technisches Gebiet

Die Erfindung betrifft eine Beschichtung für Kolben, insbesondere eine Beschichtung für den Kolbenschaft eines Verbrennungsmotors.

### Stand der Technik

Beschichtungen für den Kolbenschaft sollen eine hohe Verschleißbeständigkeit bei gleichzeitig niedrigem Reibungskoeffizienten aufweisen. Insbesondere wird eine hohe Widerstandsfähigkeit bzw. Verschleißbeständigkeit bei Motorbetriebszuständen mit hohem Verschleiß, wie z.B. bei wiederholten Kaltstarts, gefordert. Dabei soll vor allem das Durchlaufen der Beschichtung in den lasttragenden Bereichen des Kolbenschaftes vermieden werden.

Im Stand der Technik sind verschiedene Beschichtungen für Kolben von Verbrennungsmotoren bekannt.

So beschreibt die US 5,486,299 eine Schmierstoffzusammensetzung zur Beschichtung der Oberfläche von Kolben und/oder Zylindern von Motoren, die Alkohol oder nicht auf Erdöl basierende Produkte als Treibstoff verwenden. Diese Schmierstoffzusammensetzung umfasst eine Mischung aus Graphit, MoS₂ und PTFE in einer Matrix aus einem Polyamidimidharz (PAI-Harz).

Die EP 1 469 050 A1 beschreibt eine Beschichtungszusammensetzung für Kolben, die durch Mischen von ungehärtetem Polyamidimid (PAI) mit einem Festschmierstoff wie z.B. PTFE, Titanoxidpulver und einem Silankupplungsmittel erhalten wird.

Die DE 10 2005 026 664 A1 beschreibt ebenfalls eine Beschichtung für einen Kolben auf Basis eines PAI-Lacks. Diese Beschichtung ist PTFE-frei und enthält 5-15 Gew.-% Zinksulfid, 5-15 Gew.-% Graphit oder MoS₂ und 5-15 Gew.-% TiO₂, Sowohl Zinksulfid als auch TiO₂ werden in Form feiner Teilchen mit einer Partikelgröße von ≤ 0,7 µm eingesetzt.

Die DE 43 43 439 A1 beschreibt eine Hubkolbenanordnung, die einen Kolben mit einem reliefartig ausgebildeten Kolbenhemd mit Stegen aufweist, die mit einem Festschmierstoff aus Graphit, MoS₂, BN in einem Epoxidharz überzogen sind.

Die EP 0 976 795 A2 beschreibt einen vor Korrosion schützenden Schmierstoff für Scharniere o.ä., der als Gleitmittel eine Mischung aus Phenolharz, Epoxidharz, Polyvinylbutyralharz und Polyolefinwachs enthält. Die Beschichtung enthält ferner Aluminium-, Zinkteilchen oder ein Metalphosphat als Korrosionsinhibitor und ein Lösungsmittel.

Die DE 103 29 228 A1 beschreibt einen Polymer-Verbundwerkstoff für Gleitlager mit einer Polymermatrix, die z.B. aus Epoxidharz oder PEEK bestehen kann. In diese Polymermatrix sind ein Füllmaterial und nanoskalige Partikel eingebettet. Als Füllmaterial können Aramidfasern, Glasfasern, Kohlenstofffasern, Glaskugeln, PTFE, Graphit und Silkone verwendet werden. Die nanoskaligen Partikel können durch TiO₂, Al₂O₃, MgO, ZeO₂, SiC, Si₃N₄, BN, Gläser und metallische Hartstoffe gebildet werden.

### Darstellung der Erfindung

Der Erfindung liegt die Aufgabe zugrunde eine Beschichtungszusammensetzung für einen Kolben bereitzustellen, die eine verbesserte Verschleißbeständigkeit aufweist und Reibungsverluste im Motor minimiert.

Diese Aufgabe wird durch die Verwendung der in Anspruch 1 definierten Beschichtungzusammensetzung gelöst.

Es hat sich überraschend gezeigt, dass solche Formulierungen reibungsarme, verschleißfeste und gut haftende Kolbenbeschichtungen, insbesondere Kolbenschaftbeschichtungen, liefern, deren Eigenschaften den Systemen des Standes der Technik ebenbürtig sind oder diese sogar übertreffen.

Die verwendete Zusammensetzung umfasst ein thermisch härtbares Phenolharz. Thermisch härtbare Phenolharze, sogenannte Resole, können im Gegensatz zu den Novolaken über Hydroxylgruppen vernetzen. Bevorzugt werden Phenolharze mit einem mittleren Molekulargewicht von 500-1500 g/mol eingesetzt.

In einer vorteilhaften Ausführungsform umfasst die verwendete Zusammensetzung ferner ein Epoxidharz. Der Zusatz von Epoxidharzen verbessert im allgemeinen die Haftung der Schichten auf metallischen Oberflächen sowie deren Flexibilität. Zu diesem Zweck werden bevorzugt Epoxidharze auf Basis von Bisphenol A mit einem Molekulargewicht von 2000-4000 g/mol und einem Epoxyäquivalent > 700 g/mol eingesetzt.

Im Rahmen der Erfindung werden diese Harze bevorzugt als Lösung in einem Lösungsmittel eingesetzt. Die Wahl des Lösungsmittels richtet sich im Wesentlichen nach der Art der Lackapplikation und hat keinen Einfluss auf die Eigenschaften der ausgehärteten Beschichtung. Die Beschichtung von Kolben wird häufig im Siebdruckverfahren durchgeführt. Für diese Anwendung sind insbesondere Lösungsmittel mit hohem Siedepunkt bevorzugt. Geeignete Lösungsmittel sind z.B. Butylglykolacetat, Ethylglycolacetat, Dipropylenglycol, Dipropylenglycolbutylether, Butoxyethanol.

Das Phenolharz und ggf. das Epoxidharz können alternativ auch als wasserverdünnbare Dispersion eingesetzt werden.

Als Festschmierstoffe werden der Zusammensetzung Graphit, MoS₂, WS₂, BN und/oder PTFE zugesetzt. Dabei können dem Fachmann als Festschmierstoff geläufige Qualitäten eingesetzt werden. Bevorzugt wird Graphit mit einer mittleren Korngröße von 1-100µm, besonders bevorzugt von 5-50µm eingesetzt. Molybdändisulfid wird bevorzugt mit einer mittleren Korngröße von 0,1-50µm, besonders bevorzugt von 0,1-10µm eingesetzt. Bornitrid in der hexagonalen Modifikation wird bevorzugt mit einer mittleren Korngröße im Bereich von 1-100µm, besonders bevorzugt im Bereich von 1-20µm eingesetzt. Polytetrafluorethylen (PTFE) Rohstoffe werden bevorzugt mit einer mittleren Korngröße von 1-100µm, besonders bevorzugt von 1-20µm eingesetzt.

Wenn als Festschmierstoff MoS₂ eingesetzt wird, so wird dieses bevorzugt in einer Menge von 10-20 Gew.-% basierend auf der Gesamtzusammensetzung eingesetzt.

Die Korngröße der o.g. Festschmierstoffe kann mittels Streulichtverfahren auf eine dem Fachmann bekannte Weise gemessen werden.

Darüberhinaus enthält die verwendete Zusammensetzung Carbonfasern.
Bevorzugt sind Carbonfasern mit einer mittleren Faserdicke ≤ 100 µm, bevorzugt von 1-10µm, sowie einer mittleren Faserlänge ≤ 1000µm, bevorzugt von 10-500µm. Die verwendete Zusammensetzung kann auch sogenannte Carbon-Nanofasern enthalten, deren mittlere Faserdicke im Gegensatz zu herkömmlichen Carbönfasern unterhalb 1µm liegt, bevorzugt in einem Bereich von 10-500nm. Dabei werden die Dicke und die Länge herkömmlicher Carbonfasern mit einem Lichtmikroskop bestimmt. Bei Carbon-Nanofasern können diese mittels Rasterelektronenmikroskopie bestimmt werden.

Neben den oben genannten Komponenten kann die Zusammensetzung noch Additive und Hilfsstoffe enthalten wie z.B Verlaufsadditive, Entschäumer, Netzmittel, Dispergierhilfsmittel oder auch Rheologieadditive.

Besonders bevorzugte Ausführungsformen der verwendeten Beschichtungszusammensetzungen sind in der folgenden Tabelle dargestellt (Mengenangaben in g/100g der Gesamtrezeptur; Menge der Harze bezogen auf den Feststoffgehalt):

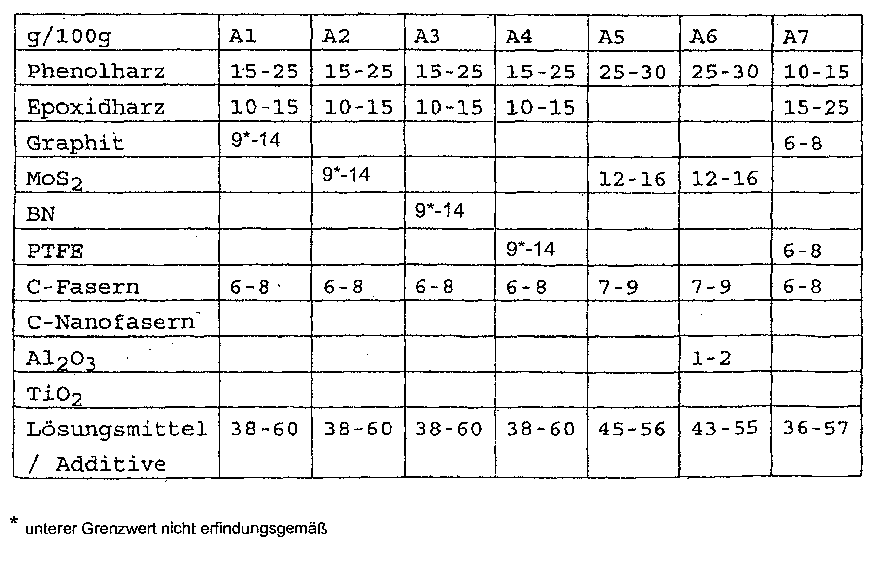

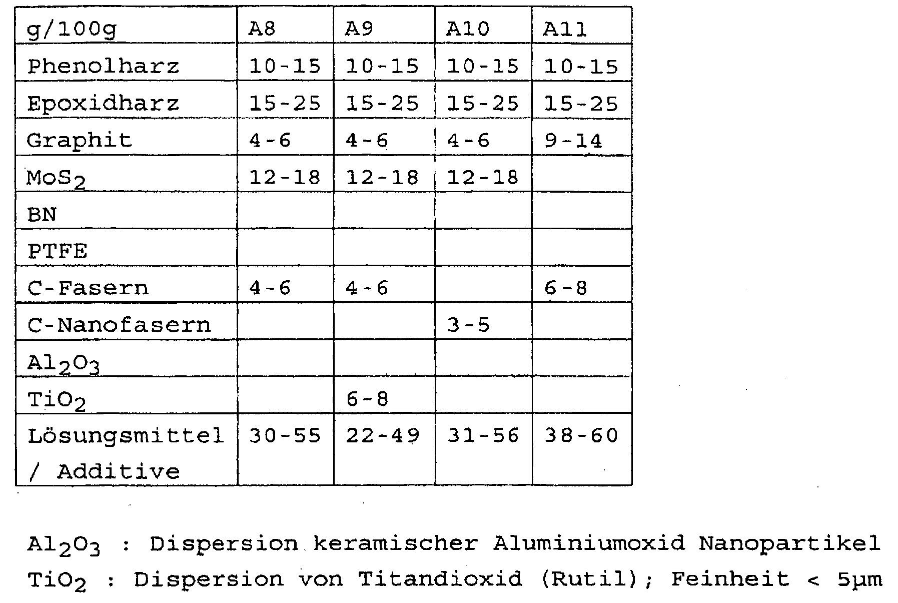

Die Erfindung wird nachfolgend anhand von Beispielen näher erläutert, wobei diese Beispiele nicht als den Gegenstand der Erfindung beschränkend angesehen werden sollen.

### Beispiele

Alle Mengen sind in Gew.-% bezogen auf die Gesamtrezeptur angegeben. Die Menge der Harze bezieht sich auf den Feststoffgehalt. Die Menge der Additive und Hilfsstoffe bezieht sich auf die Lieferform.

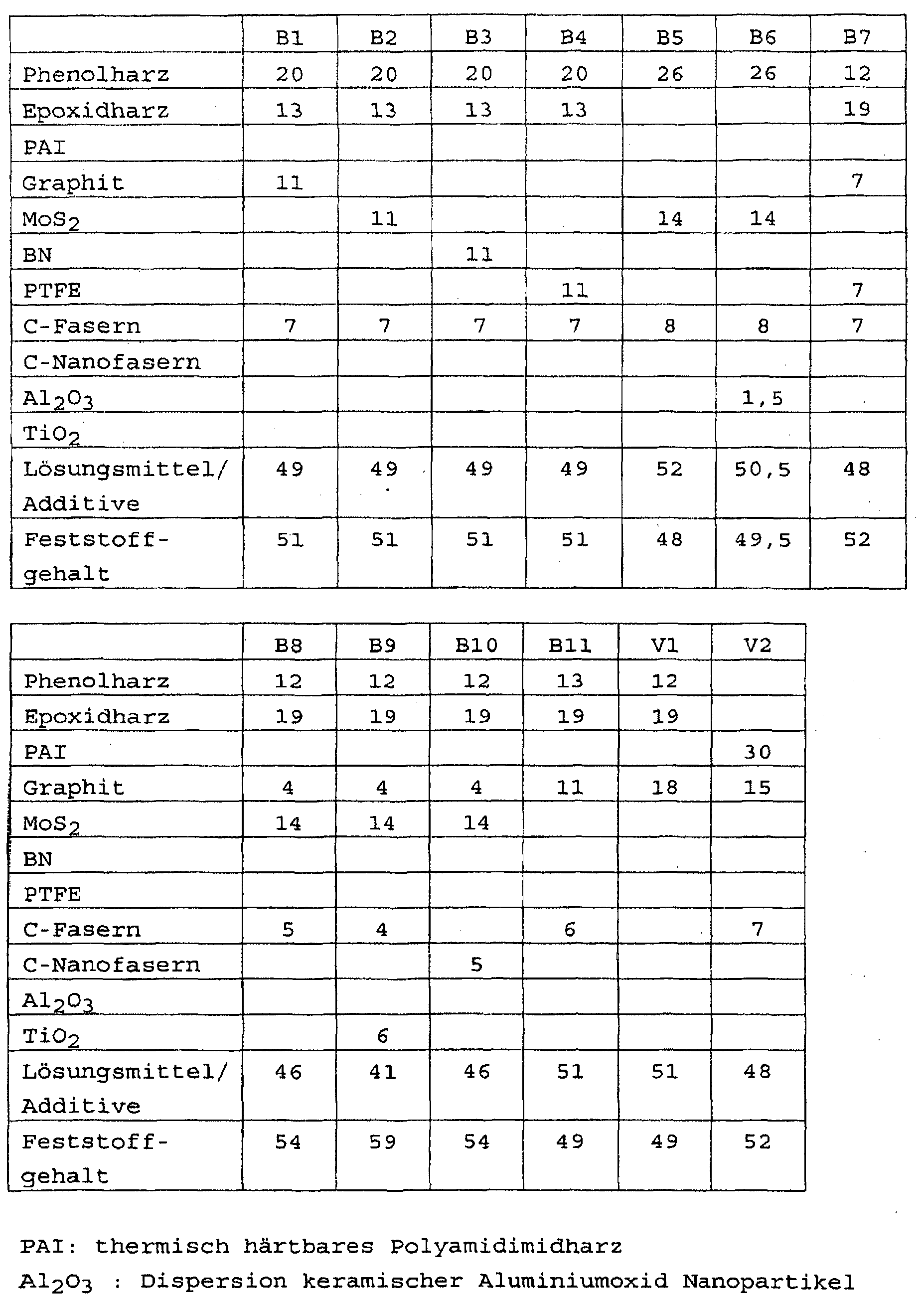

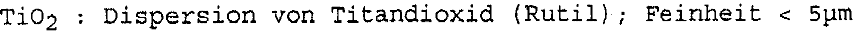

Die tribologischen Eigenschaften der Schichten wurden mit einem Cameron Plint TE-77 Tribotester (Schwingungsreibverschleißtest) untersucht. Dazu wurden Aluminiumproben mit den erfindungsgemäßen Lackrezepturen beschichtet und die Reibungskoeffizienten der Schichten in einer Paarung mit Eisenguss als Gegenkörper gemessen. Die Messungen wurden unter einer Last von 150N und bei einer Schwingungsfrequenz von 25Hz im unbeölten Zustand durchgeführt.

Neben dem Reibungskoeffizienten ist die Verschleißbeständigkeit der Schichten unter Motorbedingungen von entscheidender Bedeutung. Dazu wurden entsprechende Kolben in einem Motorenprüfstand einem Verschleißtest unterzogen. Dieser bestand aus 50 aufeinanderfolgenden Kaltstarts bei -10°C in einem handelsüblichen 4-Zylinder Benzinmotor. Der Verschleiß der Gleitlackbeschichtung am Kolbenschaft wurde nach diesem Test visuell beurteilt und mit Noten von 1 bis 5 bewertet. Dabei bedeutet Note 1 keinen sichtbaren Schichtverschleiß und Note 5 einen hohen Verschleiß bis zum Kolbenwerkstoff im gesamten lasttragenden Bereich des Kolbenschaftes.

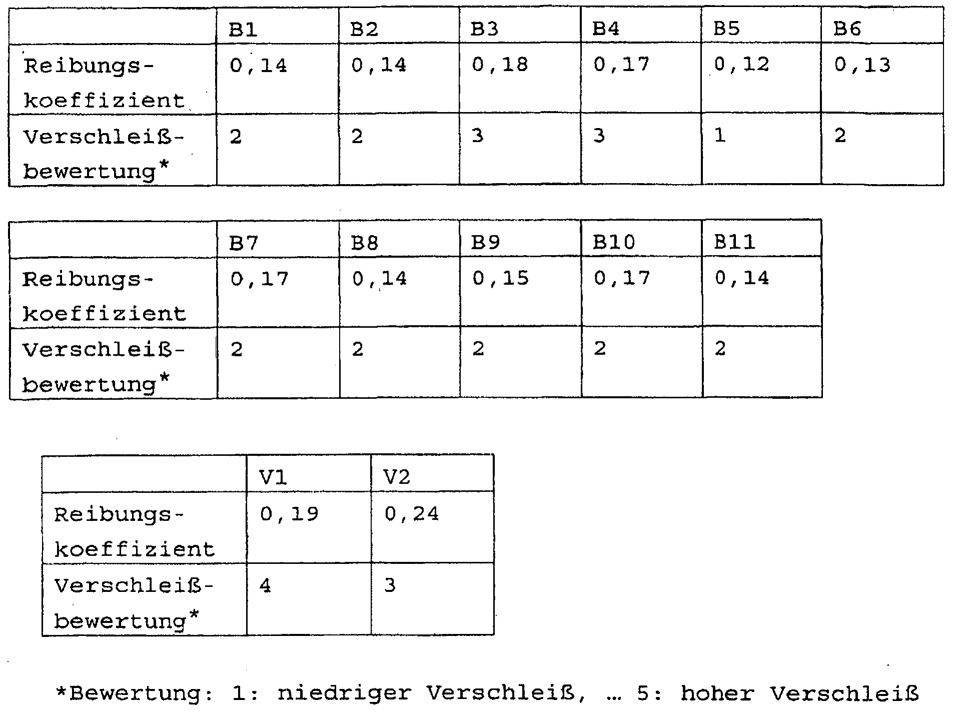

## Patentansprüche

1. Verwendung einer Beschichtungszusammensetzung für einen Kolben eines Verbrennungsmotors, die Beschichtungszusammensetzung umfassend
ein Phenolharz;
zumindest einen Festschmierstoff ausgewählt aus der Gruppe bestehend aus Graphit, MoS₂, WS₂, BN und PTFE in einer Menge von 10-30 Gew.-%, basierend auf der Gesamtzusammensetzung; und
Carbonfasern in einer Menge von 3-10 Gew.-%, basierend auf der Gesamtzusammensetzung.

2. Verwendung nach Anspruch 1, wobei in der Beschichtungszusammensetzung Carbonfasern mit einer Dicke ≤ 100µm und einer Länge ≤ 500µm eingesetzt werden.

3. Verwendung nach Anspruch 1 oder 2, wobei die Beschichtungszusammensetzung weiter Additive und Hilfsstoffe umfasst.

4. Verwendung nach einem der Ansprüche 1 bis 3, wobei in der Beschichtungszusammensetzung ferner ein Epoxidharz enthalten ist.

5. Verwendung nach einem der vorangehenden Ansprüche für den Kolbenschaft.

## Claims

1. Use of a coating composition for a piston of an internal combustion engine, the coating composition comprising a phenolic resin;
at least one solid lubricant selected from the group comprising graphite, MoS₂, WS₂, BN and PTFE in a proportion of 10-30 weight-%, as a proportion of the composition as a whole;
and carbon fibres in a proportion of 3-10 weight-%, as a proportion of the composition as a whole.

2. Use according to claim 1, wherein carbon fibres of a thickness of ≤ 100µm and a length of ≤ 500µm are used in the coating composition.

3. Use according to claim 1 or 2, wherein the coating composition also comprises additives and auxiliary materials.

4. Use according to one of claims 1 to 3, wherein an epoxy resin is also included in the coating composition.

5. Use according to one of the preceding claims for the piston skirt.

## Revendications

1. Utilisation d'une composition de revêtement pour un piston d'un moteur à combustion, la composition de revêtement comprenant :
une résine phénolique ;
au moins un lubrifiant solide choisi dans le groupe comprenant le graphite, le MoS₂, le WS₂, le BN et le PTFE en quantité de 10-30 % en poids sur la base de la composition totale ; et
des fibres de carbone en quantité de 3-10 % en poids sur la base de la composition totale.

2. Utilisation selon la revendication 1, dans laquelle des fibres de carbone d'une épaisseur ≤ 100 µm et d'une longueur ≤ 500 µm sont utilisées dans la composition de revêtement.

3. Utilisation selon la revendication 1 ou 2, dans laquelle la composition de revêtement comprend en outre des additifs et des agents auxiliaires.

4. Utilisation selon l'une quelconque des revendications 1 à 3, dans laquelle une résine époxyde est en outre incluse dans la composition de revêtement.

5. Utilisation selon l'une quelconque des revendications précédentes pour la tige de piston.
